# EUROPEAN PATENT APPLICATION

(11) **EP 1 840 051 A1**
(43) Date of publication of application: **03.10.2007**
(21) Application number: 06006624.8
(22) Date of filing: 29.03.2006
(51) Int. Cl.: B65G 21/20

(54) **Adjustable guide rail**

(71) Applicant: Transmisiones Mecánicas AVE, S.A., 08940 Cornellá de Llobregat (ES)
(72) Inventor: Vera Valero, Ambrosio, 08940 Cornella (ES)
(74) Representative: Grünecker, Kinkeldey, Stockmair & Schwanhäusser Anwaltssozietät

(57) **Abstract**

The present invention relates to an adjustable railing device for a conveying path on which goods, in particular bottles, can be conveyed, the railing device comprising a railing defining a border of the conveying path, a support which supports the railing, and at least one adjustment mechanism for releasably adjusting the railing's position with respect to the support for adjusting the border of the conveying path. In order to provide, in an easy manner, an adjustable railing device which can be handled easily, although it has a good adjustability, it is suggested that the adjustment mechanism comprises a lever mechanism for adjusting the position of the railing with respect to the support.

## Description

The present invention relates to an adjustable railing device for a conveying path on which goods, in particular bottles and the like, can be conveyed.

A known generic adjustable railing device comprises a railing defining a border of a conveying path, and a support which supports the railing. The railing is mounted to the support by means of a snap rod comprising snap grooves. A spring loaded engagement means is engaged within a snap groove in order to lock the snap rods positions relative to the support. By pressing a pushbutton, the engagement can be released.

Such kind of adjustable railing device is of a durable construction but an operator needs to use both hands for adjusting the railing, one for pushing the pushbutton and the other for moving the snap rod.

It is the object of the present invention to provide, in an easy manner, an adjustable railing device which can be handled easily although it has a good adjustability.

According to the present invention, the object is solved by an adjustable railing device having the features of independent claim 1.

By means of the lever mechanism, a continuously variable adjustment of the railing's position, with respect to the conveying path, can be realized. The lever mechanism also allows the provision of a construction which can be operated easily.

Advantageously, the adjustment mechanism may comprise an orientation device which defines the orientation of the railing with respect to the support. Hereby, a desired orientation of the railing, with respect to the conveying path, is realized.

Preferably, the orientation device may comprise a lever mechanism, which defines the orientation of the railing with respect to the support, in dependency on the position of its levers. The lever mechanism provides for a continuous regulation of the orientation of the railing.

Favorably, the orientation device may comprise a scissor mechanism. The scissor mechanism allows a continuous adjustment of the orientation in an easy manner by a surprisingly simple construction.

Particularly advantageous, the orientation device may comprise the lever mechanisms twice, the two lever mechanisms being together a doubled lever mechanism, the two lever mechanisms may be linked with each other, preferably by at least one linking joint. The doubled mechanism provides for a spread appliance of forces and can help to hold the orientation of the railing in a stable manner.

Particularly preferable, the adjustment mechanism may comprise a drive device for adjusting a distance between the railing and the support. By means of the drive device, the border of the conveying path can be shifted, especially for making the conveying path narrower or broader.

Favorably, the drive device may comprise a lever mechanism which adjusts the distance between the railing and the support by the movement of its levers. The lever mechanism allows to realize a continuous variation of the distance between the railing and support, i.e. a continuous variation of the border of the conveying path.

Particularly preferable, the drive device may comprise a toggle lever mechanism. The toggle lever mechanism provides for a powerful adjustment of the distance with a surprisingly easy construction.

Advantageously, the drive device may comprise its lever mechanism twice, two lever mechanisms being together a doubled lever mechanism, the two lever mechanisms may be linked with each other, preferably by at least one linking joint. The doubled lever mechanism provides for a spread appliance of forces of the drive device and helps to hold the rail in a stable manner.

Favorably, the lever mechanism of the orientation device and the lever mechanism of the drive device may be linked with each other. Hereby, a coordination of the kinematic of both lever mechanisms can be realized. Especially, it is possibly to provide a construction in which by an operation of the lever mechanism of the drive device also the lever mechanism of the orientation device is operated.

Preferably, the lever mechanism of the orientation device and the lever mechanism of the drive device may have at least one common pivoting axis. This construction allows the use of a common joint and / or bearing.

Advantageously, the lever mechanism of the orientation device and the lever mechanism of the drive device may have at least one common lever arm. This allows an integrated construction of both lever mechanisms, which improves the compactness.

Favorably, the lever mechanism of the orientation device and the lever mechanism of the drive device may be linked via an actuator assembly of the drive device for operating same. Hereby, forces for the relative movement of both lever mechanisms can be applied directly to them both.

Particularly preferable, the actuator assembly may connect a joint of the lever mechanisms of the orientation device with a joint of the lever mechanism of the drive device, wherein the actuator assembly may be capable of moving the joints relative to each other. Thereby, the levers of the drive device and / or the orientation device, can be operated indirectly. It is possible to realize a relatively large movement of the outer ends of levers by a rather small relative movement of the joints.

Particularly advantageous, the actuator assembly might be in engagement with a linking joint of the doubled lever mechanism of the orientation device and / or with a linking joint of the doubled lever mechanism of the drive device. Thereby, the above-mentioned advantages can be achieved, even if the orientation device and / or the drive device has a doubled lever mechanism.

Favorably, the actuator assembly may comprise a thread mechanism. This provides for a precise and continuous operation of the adjustment mechanism and, thus, for a precise and continuous adjustment of the railing.

Advantageously, the actuator assembly might be self locking. Hereby, the actuator assembly has an integrated brake function, so that the position of the adjustment mechanism is held if the actuator assembly is not operated.

Particularly preferable, the doubled lever mechanism of the drive device might be generally arranged within the doubled lever mechanism of the orientation device. This provides for a good room efficiency of the adjustment mechanism.

Particularly favorable, the adjustable railing device may comprise at least two adjustment mechanisms which have one common actuator element. By actuating one actuator element, both adjustment mechanisms can be driven.

Favorably, the actuator element might be a thread rod. A thread rod can be easily operated and provides for an arrangement of good room efficiency, although two adjustment mechanisms are linked drivingly.

Separate protection is sought for a conveying device with at least one inventive adjustable railing deice.

Embodiments of the present invention are described with reference to the drawing in which the following is shown:
- Fig. 1: a first embodiment of a conveying device, according to the present invention, with two adjustable railing devices in a first position,
- Fig. 2: the conveying device of Fig. 1, with the adjustable railing devices in a second position,
- Fig. 3: a perspective view of one adjustable railing device in the second position, and
- Fig. 4: a partial perspective view of the railing device of a second embodiment of the present invention, with the railing device being in a first position according to Fig. 1.

In the following, the same reference numerals are used for the same parts described in the embodiments.

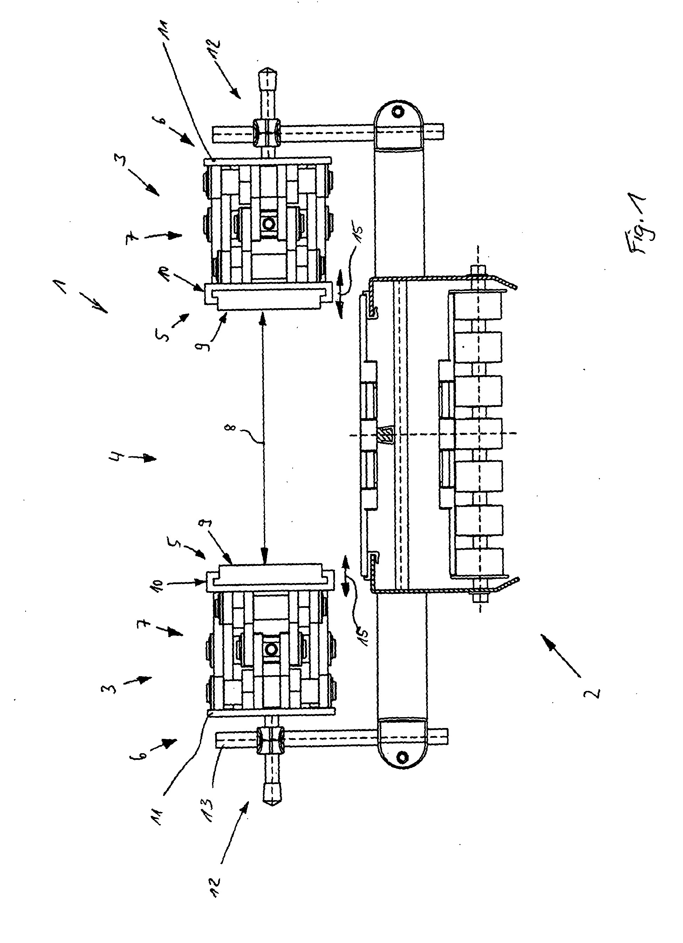

Fig. 1 shows a first embodiment of an inventive conveying device for conveying goods, e.g. containers, bottles, tins, etc.. The conveying device 1 comprises a transportation assembly 2, e.g. of a belt-like type, by means of which the goods can be moved, two adjustable railing devices 3, and two mounting assemblies 12, 12 by means of which the railing devices 3, 3 are mounted to the transportation assembly.
Each adjustable railing device has a railing 5 defining a border of a conveying path 4 of the conveying device, a support 6 which supports the railing 5, and at least one adjustment mechanism 7 for releasably adjusting the railing's position with respect to the support 6, as indicated by an arrow 15. Hereby, the width of the conveying path 4 can be adjusted to the size of the goods moving on the conveying path and / or the goods can be guided along a desired moving route.

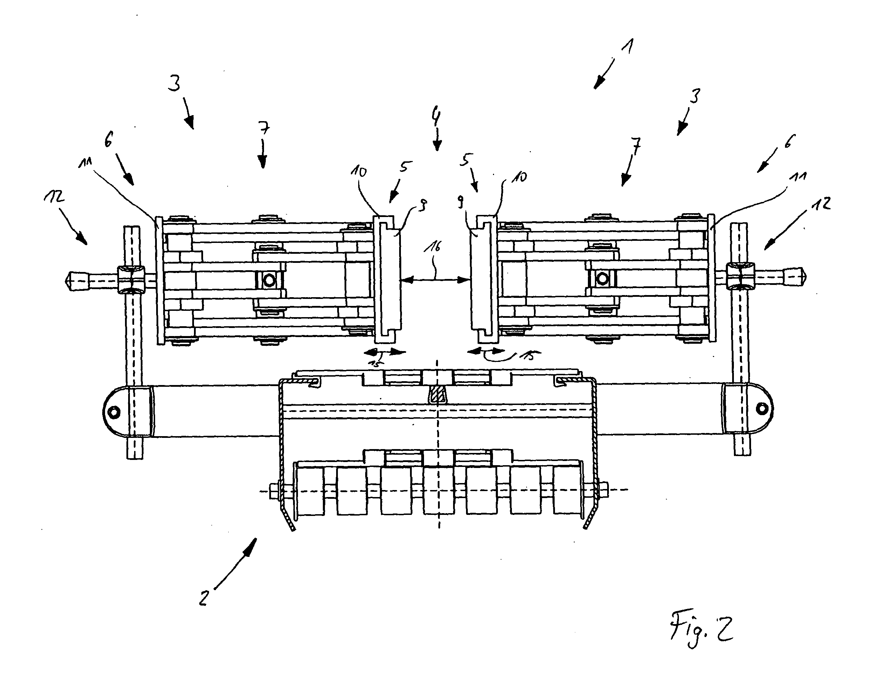

In Fig. 1, the adjustable railing devices 3, 3, are shown in a first position in which the railings 5 are retracted with respect to their support 6, i.e. the conveying path 4 has a first width 8. ln Fig. 2, the adjustable railing devices 3, 3 are shown in a second position in which the railings 5, 5, are in an extended position with respect to their support 6. Consequently, the conveying path 4 has a second width 16 which is smaller than the first width shown in Fig. 1.

If, in the following, the description is made only for one adjustable railing device, it may analogously apply to the other adjustable railing device.

The railing 5 comprises a contact profile 9 of T-like cross-sectional shape and a holder 10 with a C-like cross-sectional shape. The contact profile 9 is inserted into the holder 10 and guides the goods moving on the conveying path 4, i.e. contacts them. The support 6 comprises a backing plate 11 on which the adjustment mechanism 7, carrying the railing 5, is mounted.

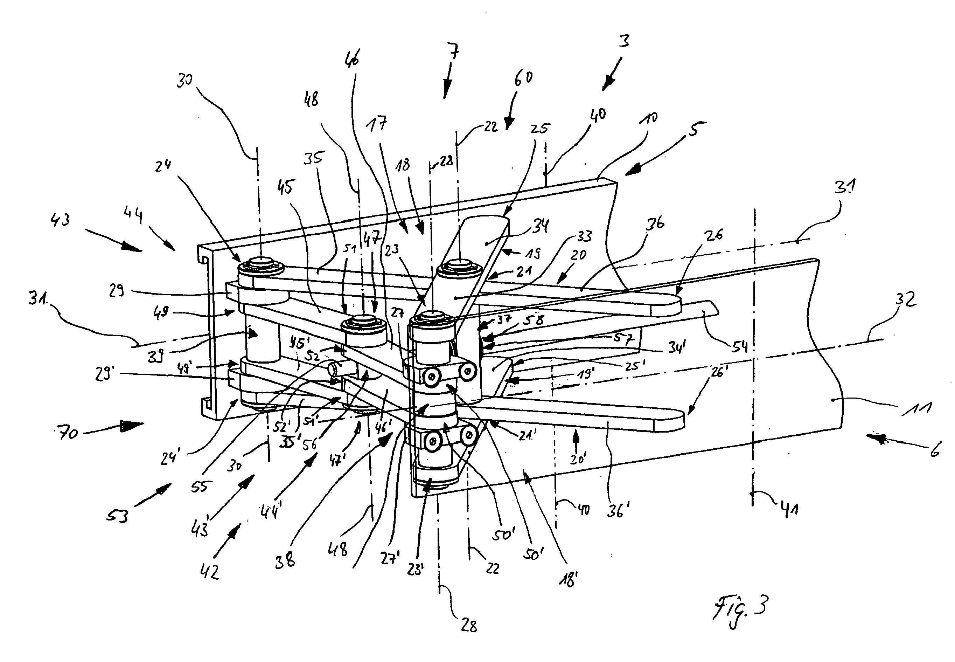

In Fig. 3, one adjustable railing device 3 is partially shown in its second position according to Fig. 2.

The adjustment mechanism 7 comprises an orientation device 17 and an drive device 42. The orientation device defines the orientation of the railing 5 with respect to the support 6, and by means of the drive device 42 the distance between the railing 5 and the support 6 is adjusted.

The orientation device 17 comprises two lever mechanisms 18, 18' which together constitute a doubled lever mechanism 60. However, the orientation device may comprise only one of said lever mechanisms, which is described below.
In this embodiment, the lever mechanism of the orientation device 17 is a scissor mechanism 18 comprising a first scissor lever 19 and a second scissor lever 20 being pivotably connected to each other by means of a scissor joint 21 defining a scissor axis 22. First ends 23, 24 of the scissor levers 19, 20 are in direct contact with their respective one of the holder 10 and the backing plate 11, as shown in Fig. 3. Second ends 25, 26 of the scissor levers 19, 20 are engaged with their respective one of the holder 10 and the backing plate 11 by means of bearings 29, 27, wherein the holder bearing 29, provided at the holder 10, defines a holder bearing axis 30 and the backing bearing 27, provided at the backing plate 11, defines a backing bearing 28, as shown in Fig. 3.

Via the engagement of the scissor levers 19, 20 with the backing plate 11 and the holder 10, a first orientation of the holder 10, with respect to the backing plate 11, is defined, namely, the orientation of a longitudinal axis 31 of the holder, with respect to a longitudinal axis 32 of the backing plate 11. In this embodiment, the longitudinal axes 31, 32 are held parallel to each other at every distance of the holder 10 with respect to the backing plate 11. However, it is possible to vary the angle between the longitudinal axis 31, 32, in dependency on the distance between the holder 10 and the backing plate 11 by shortening or lengthening the arms 33, 34, 35, 36 of the first and scissor levers 19, 20, e.g. by shortening or lengthening at least one of their first arms 33, 35 or second arms 34, 36.

In the present embodiment, the orientation device 17 comprises the lever mechanism 18 as described above twice, wherein the elements of the second set of levers are indicated by the same reference numerals but marked by an apostrophe. The elements of both sets of levers of the orientation device 17 are provided in parallel to each other, more particularly, mirror symmetrically to each other, and are linked with each other, preferably by at least one linking joint, as shown in Fig. 3. A first linking joint 37 is provided between the scissor joints 21, 21', a second linking joint 38 is provided between the first ends 23, 23' of the first scissor levers 19, 19', and a third linking joint 39 is provided between the first ends 24, 24' of the second scissor levers 20, 20'.

By providing the doubled lever mechanism 60 of the orientation device 17, its forces are applied in a spread manner to the holder and the backing plate 11. Also, a second orientation of the holder 10 with respect to the backing plate 11 is defined, namely the orientation of a traversal axis 40 of the holder 10 with respect to a traversal axis 41 of the backing plate 11. Both traversal axes 40, 41 are approximately traverse to their respective longitudinal axes 31, 32. In this embodiment, the transversal axes 40, 41 are held approximately in parallel to each other at any distance of the holder 10 with respect to the backing plate 11. However, it is possible to provide the first set of levers of the orientation device differently to the lever mechanisms of the orientation device, differently so as to vary the angle between the transversal axes 40, 41.

The drive device 42 comprises two lever mechanisms 43, 43' which together constitute a doubled lever mechanism 70 of the drive device 42. However, the drive device may comprise only one of said lever mechanisms which is described below.

The lever mechanism 43 comprises a toggle lever mechanism 44 having a first toggle lever 45 and a second toggle lever 46 which are pivotably connected with each other by means of a toggle joint 47 defining a toggle axis 48. A first end 49 of the first toggle lever 45 is pivotably mounted to the holder bearing 29 and a first end 50 of the second toggle lever 46 is pivotably mounted to the backing bearing 27, as shown in Fig. 3. At their second ends 51, 52, the toggle levers 45, 46 are connected via said toggle joint 47.

The lever mechanism 43 of the drive device 42 further comprises a second pair of levers which are pivotally connected with each other by means of a joint, and each of them is also pivotally connected with an own toggle lever 45, 46 at the first end 49, 50 thereof, as shown in Fig. 3. In this embodiment, the lever mechanism 43 of the drive device 42 uses first arms 33, 35 of the scissor mechanism 18 as their second pair of levers, i.e. the scissor mechanism 18 and the lever mechanism 43 are linked with each other by having at least one lever arm in common. Irrespective thereof, the scissor mechanism 18 and the lever mechanism 43 of the drive device 42 have joints associated with the holder bearing 29 and the backing bearing 27 in common, i.e. they are linked with each other by having at least one bearing and / or joint and / or pivoting axis in common. The scissor mechanism 18 and the lever mechanism 43 of the drive device 42 further have the scissor joint 21 and the scissor axis 22 in common.

The distance between the holder 10 and the backing plate 11 is varied by moving the toggle joint 47 relative to the scissor joint 21. The toggle lever mechanism 44 provides for a powerful movement of the holder 10 relative to the backing plate 11 and the second pair of levers, i.e. the first arms 33, 35 of the scissor mechanism, carry the resulting forces. The orientation device 17 is driven by the drive device 42 via the linkage between both devices.

For operating its lever mechanism 43, the drive device 42 comprises an actuator assembly 53 which is, in this embodiment, a thread gearing device comprising a thread rod 54 as an actuator element. The thread rod 54 comprises a threaded section having an outer screw thread being in engagement with a counter thread of an extension 56 of the toggle joint 47. The thread rod also comprises and axial bearing section being in axial engagement with an axial bearing 58 being an extension of the scissor joint 21, i.e. the lever mechanism of the orientation device and the lever mechanism of the drive device are linked via the actuator assembly. By rotating thread rod 54, the axial position of the thread rod to the scissor joint 21 is held while the toggle joint 47 moves relative to the longitudinal axis of the thread rod 54.

In this embodiment, the extension of the scissor joint is the third linking joint 37 through which the thread rod 54 extends. The actuator assembly, i.e. the thread gearing device, is self-locking.

In the present embodiment, the lever mechanism 43 of the drive device 42, as describe above, is provided twice, hereby applying its forces in a spread manner to the holder 10 and backing plate 11. The second set of levers of the drive device is provided in parallel to the first set of levers of the drive device, more particularly, in a mirror symmetrical manner, as shown in Fig. 3. The elements of the second set of levers of the drive device are indicated by the same reference numerals as of the first set of levers of the drive device, but are marked with an apostrophe.

Both sets of levers of the drive device 42 are linked with each other by linking joints, namely by the three joints 37, 38, 39 described above. The extension 56 of the toggle joint 47 is constructed as a fourth linking joint linking both toggle joints 47, 47'.

As the lever mechanism of the drive device 42 is a doubled lever mechanism, the drive device 42 defines the second orientation of the holder 10 with respect to the backing plate 11. Due to the mirror symmetrical construction of the lever mechanism of the drive device, the transversal axis 40, 41 of the holder 10 and the backing plate 11 are generally held parallel to each other at any distance of the holder 10 to the backing plate 11. However, it is also possible to vary the angle between the transversal axes 40, 41 by using different lever mechanisms of the drive device. The second orientation could be controlled only by the drive device 42 if the orientation device omitted or is of an appropriate construction, e.g. controls only the first orientation.

As shown in Fig. 3, the doubled lever mechanism 60 of the drive device 42 is generally arranged within the doubled lever mechanism 70 of the orientation device 17, in particular, the toggle lever mechanism is arranged inside the doubled scissor mechanism of the orientation device.

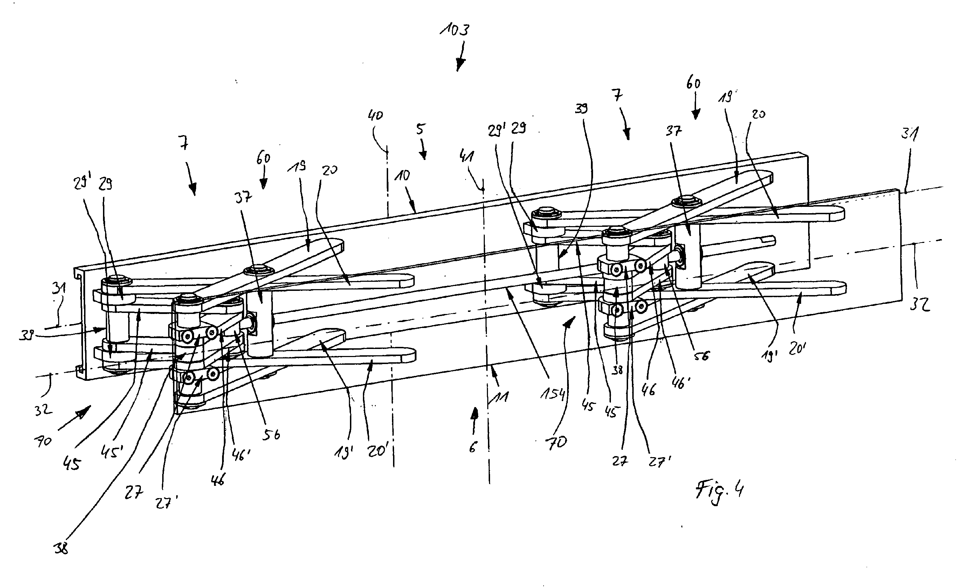

It is possible to provide only one adjustment mechanism in the inventive adjustable railing device 3, e.g. as shown in Fig. 3. However, the adjustable railing device can comprise at least two adjustment mechanisms 7, e.g. as shown in Fig. 4 depicting a second embodiment of the present invention. Here, the inventive adjustable railing device 103 comprises two identical adjustment mechanisms 7, 7. The adjustment mechanisms comprise a common actuator element, namely a thread rod 154 which comprises two thread rods, as described with respect to Fig. 3, in an integral manner. By means of the thread rod 154, both adjustment mechanisms can be operated at the same time. The thread rod 154 extends parallel to the holder 10 and the backing plate 11. Using one common thread rod is also possible, even if the railing 5 is interrupted between the adjustment mechanisms 7, 7.

## Claims

1. Adjustable railing device for a conveying path (4) on which goods, in particular bottles, can be conveyed, the railing device (3, 103) comprise a railing (5) defining a border of the conveying path (4), a support (6) which supports the railing (5), and at least one adjustment mechanism (7) for releasably adjusting the railing's position with respect to the support for adjusting the border of the conveying path, **characterized in that** the adjustment mechanism (7) comprises a lever mechanism (18, 43) for adjusting the position of the railing with respect to the support.

2. Adjustable railing device according to claim 1, **characterized in that** the adjustment mechanism (7) comprises an orientation device (17) which defines the orientation of the railing (5) with respect to the support (6).

3. Adjustable railing device according to claim 2, **characterized in that** the orientation device (17) comprises a lever mechanism (18) which defines the orientation of the railing (5) with respect to the support (6) in dependency on the position of its levers (19, 20).

4. Adjustable railing device according to claim 2 or 3, **characterized in that** the orientation device (17) comprises a scissor mechanism (18).

5. Adjustable railing device according to claim 3 or 4, **characterized in that** the orientation device (17) comprises the lever mechanism twice, the two lever mechanisms being together a doubled lever mechanism, the two lever mechanisms being linked with each other, preferably by at least one linking joint **(37, 38, 39).**

6. Adjustable railing device according to at least one of the preceding claims, **characterized in that** the adjustment mechanism (7) comprises a drive device (42) for adjusting a distance between the railing (5) and the support (6).

7. Adjustable railing device according to claim 6, **characterized in that** the drive device (42) comprises a lever mechanism (43) which adjusts the distance between the railing (5) and the support (6) by the movement of its levers (33, 35, 45, 46).

8. Adjustable railing device according to claim 6 or 7, **characterized in that** the drive device (42) comprises a toggle lever mechanism (44).

9. Adjustable railing device according to claim 7 or 8, **characterized in that** the drive device (42) comprises the lever mechanism twice, the two lever mechanisms (43, 43') being together a doubled lever mechanism, the two lever mechanisms being linked with each other, preferably by at least one linking joint (37, 38, 39).

10. Adjustable railing device according to at least one of claims 3 to 5 and at least one of claims 7 to 9, **characterized in that** the lever mechanism (18, 18') of the orientation device (17) and the lever mechanism (43, 43') of the drive device (42) are linked with each other.

11. Adjustable railing device according to claim 10, **characterized in that** the lever mechanism (18) of the orientation device (17) and the lever mechanism (43) of the drive device (42) have at least one common pivoting axis (22, 28, 30).

12. Adjustable railing device according to claim 10 or 11, **characterized in that** the lever mechanism (18) of the orientation device (17) and the lever mechanism (43) of the drive device (42) have at least one common lever arm (33, 35).

13. Adjustable railing device according to at least one of claims 10 to 12, **characterized in that** the lever mechanism (18) of the orientation device (17) and the lever mechanism (43) of the drive device (42) are linked via an actuator assembly (53) of the drive device (42) for operating same.

14. Adjustable railing device according to claim 13, **characterized in that** the actuator assembly (53) connects a joint (21) of the lever mechanism (18) of the orientation device (17) with a joint (47) of the lever mechanism (43) of the drive device (42), wherein the actuator assembly is capable of moving the joints relative to each other.

15. Adjustable railing device according to claim 14 and at least one of claims 5 and 9, **characterized in that** the actuator assembly (53) is in engagement with a linking joint (37) of the doubled lever mechanism (18, 18') of the orientation device (17) and / or with a linking joint (56) of the doubled lever mechanism (43, 43') of the drive device (42).

16. Adjustable railing device according to at least one of claims 13 to 15, **characterized in that** the actuator assembly (53) comprises a thread mechanism.

17. Adjustable railing device according to at least one of claims 13 to 16, **characterized in that** the actuator assembly (53) is self locking.

18. Adjustable railing device according to at least one of claims 3 to 5 and at least one of claims 7 to 17, **characterized in that** the doubled lever mechanism (43, 43') of the drive device (42) is generally arranged within the doubled lever mechanism (18, 18') of the orientation device (17).

19. Adjustable railing device according to at least one of the preceding claims, **characterized in that** the adjustable railing device (103) comprises at least two adjustment mechanisms (7, 7) which have one common actuator element (154).

20. Adjustable railing device according to claim 19, **characterized in that** the actuator element is a thread rod (154).

21. Conveying device with at least one adjustable railing device according to at least one of the preceding claims.
